(19) **Europäisches Patentamt / European Patent Office / Office européen des brevets**

(11) **EP 0 823 995 B1**

(12) **EUROPÄISCHE PATENTSCHRIFT**

(45) Veröffentlichungstag und Bekanntmachung des Hinweises auf die Patenterteilung:
**16.02.2011 Patentblatt 2011/07**

(51) Int Cl.:
*A01N 39/02* *(2006.01)* *A01N 43/76* *(2006.01)*
*A01N 43/40* *(2006.01)* *A01N 43/60* *(2006.01)*
*A01N 43/80* *(2006.01)*

(21) Anmeldenummer: **97112787.3**

(22) Anmeldetag: **25.07.1997**

(54) **Synergistische Wirkstoffkombinationen zur Bekämpfung von Schadpflanzen in Nutzpflanzenkulturen**

Synergistic combinations of active substances for the control of weeds in cultures of useful plant

Combinaisons synergiques de principes actifs pour combattre les mauvaises herbes dans les cultures de plantes utiles

(84) Benannte Vertragsstaaten:
**ES GR IT PT**

(30) Priorität: **12.08.1996 DE 19632424**

(43) Veröffentlichungstag der Anmeldung:
**18.02.1998 Patentblatt 1998/08**

(73) Patentinhaber: **Bayer CropScience AG
40789 Monheim (DE)**

(72) Erfinder:
- **Huff, Hans Philipp, Dr.
65817 Eppstein (DE)**
- **Wolff, Jean-Michel
65719 Hofheim (DE)**
- **Grüninger, Kurt
88410 Bad Wurzach (DE)**
- **Bieringer, Hermann, Dr.
65817 Eppstein (DE)**

(56) Entgegenhaltungen:
EP-A- 0 004 414   EP-A- 0 043 800
EP-A- 0 086 392   EP-A- 0 103 732
EP-A- 0 302 983   EP-A- 0 614 608
DE-A- 2 537 290   DE-A- 2 815 287
DE-A- 3 444 860

- DATABASE CROPU STN-International STN-accession no. 87-90523 , E.C. HUGHES ET AL. : "Postemergence Herbicide Trails on Potatoes Variety Red Lasoda " XP002048061 & RES.REP.EXPERT COMM.WEEDS WEST.CAN., 31 MEET, Bd. 2, 1984, Seiten 593-94,
- J.D.A. WEVERS : "Low Dosage systems for controlling broadleaf and annual weeds in sugarbeet" MEDEDELINGEN VAN DE FACULTEIT LANDBOUWWETENSCHAPPEN, RIJKSUNIVERSITEIT GENT,, Bd. 56, Nr. 3a, 1991, Seiten 611-15, XP002048310
- JORDAN, DAVID L.: "Influence of adjuvants on the antagonism of graminicides by broadleaf herbicides" WEED TECHNOLOGY, Bd. 9, Nr. 4, 1995, Seiten 741-7, XP002048311
- CHEMICAL ABSTRACTS, vol. 111, no. 5, 31.Juli 1989 Columbus, Ohio, US; abstract no. 35091, STANGER, CHARLES E. ET AL: "Italian ryegrass ( Lolium multiflorum) accessions tolerant to diclofop" XP002048060 & WEED SCI. (1989), 37 (3), 350-2 CODEN: WEESA6;ISSN: 0043-1745, 1989,

EP 0 823 995 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Synergistische Wirkstoffkombinationen zur Bekämpfung von Schadpflanzen in Nutzpflanzenkulturen.

Die Erfindung betrifft das technische Gebiet der Pflanzenschutzmittel, insbesondere der Kombination von Wirkstoffgruppen mit unterschiedlichem Wirkungsmodus und Wirktyp, die hervorragend für den Einsatz gegen Schadpflanzen in Nutzpflanzenkulturen geeignet sind.

In vielen Nutzpflanzenkulturen treten Gräser als unerwünschte Konkurrenten auf, die nur mit erheblichem Aufwand und unter hohen Kosten zu bekämpfen sind. Sie keimen und wachsen im Boden über einen längeren Zeitraum hinweg heran und können daher nur mit Herbiziden effektiv bekämpft werden, die ihre Wirkung über Blatt und Boden entfalten.

Als wichtige Ungräser, die weltweit in Nutzpflanzenkulturen vorkommen und von hohem wirtschaftlichen Stellenwert sind, seien exemplarisch aufgeführt: Alopecurus myosuroides, Avena fatua u. a. Formen von Flughafer, Lolium spp., Phalaris spp., Setaria spp., Echinochloa spp., Poa spp., Bromus spp., Elymus repens, Sorghum spp. und andere, wie beispielsweise Agrostis, Panicum usw..

Es ist seit langem bekannt, daß Verbindungen aus der Gruppe der 1,2,4-Triazinone und der (Hetero)Aryloxyphenoxypropionate eine ausgezeichnete herbizide Wirkung besitzen, wenngleich ihre bevorzugte Anwendung in verschiedenen Kulturen mit teilweise erheblich unterschiedlichen Aufwandmengen erfolgt.

In der EP-A-0 614 608 sind synergistisch wirksame herbizide Mittel zur Bekämpfung von Ackerfuchsschwanz beschrieben, die bestimmte Kombinationen von (Hetero)Aryloxyphenoxypropionaten und Herbiziden anderen Wirkungstyps enthalten. Diese beschriebenen Mittel eignen sich im allgemeinen gut zur Bekämpfung von Gräsern wie Flughafer (Avena fatua) oder Ackerfuchsschwanz (Alopecurus myosuroides) bzw. von Unkräutern wie Vogelmiere (Stellaria media) in Getreidekulturen.

Aus Res.Rep.Expert Comm.Weeds West. Can., 31 Meet. Bd. 2, 1984, S. 593-94 ist bekannt, einige Kombinationen von Metribuzin mit bestimmten Herbiziden wie Haloxyfop, Quizalofop, Sethoxydim oder Fluazifop gegen Unkräuter in Kartoffelkulturen einzusetzen.

In Weed Technology Bd. 9 (1995), Nr. 4, S. 741-747 wird die Verwendung von Mischungen von Diclofop-methyl und Metribuzin gegen Lolium multiflorum beschrieben.

Aus EP-A-0103732 ist die kombinierte Verwendung von Metribuzin und einem speziellen Phenoxyphenoxypropionsäurederivat mit synergistischer Wirkung gegen Lolium multiflorum in Weizen beschrieben.

Aus EP-A-0302983 ist bekannt, dass Schadgräser aus der Gattung Phalaris mit dem Triazin-Herbizid Terbutryn bekämpft werden können und dass eine Kombination von Terbutryn und Chlortoluron gegen Schadgräser aus den Gattungen Phalaris und Lolium in Getreide eingesetzt werden kann.

Die Wirkstoffe aus der Gruppe der 1,2,4-Triazinone sind als selektive, systemische Herbizide bekannt, die als Hemmstoffe der Photosynthese agieren und überwiegend über die Wurzeln, aber auch über die Blätter aufgenommen werden. Das Herbizid Metribuzin kann bisher in Getreide und Mais nur in beschränkten Aufwandmengen eingesetzt werden, höhere Dosierungen sind insbesondere auf leichten Böden und bei hohen Niederschlägen nicht voll verträglich. Andererseits ist Metribuzin in Kulturen, wie Sojabohnen und Kartoffeln, in vielen Ländern ein weit verbreitetes Mittel. Höhere Dosierungen, wie sie in Getreide und Mais zur Bekämpfung von Gräsern in der Regel benötigt werden, sind vielfach nicht akzeptabel, weil sie nicht voll selektiv sind. Ganz allgemein ist die Wirksamkeit gegen viele Gräser nicht befriedigend, so daß in der Praxis auch Mischungen mit anderen Bodenherbiziden wie z. B. Alachlor, Metolachlor oder Dimethenamid vorgenommen werden, um die Gräser mit höherer Wirkungssicherheit zu bekämpfen.

Herbizide aus der Gruppe der (Hetero)Aryloxyphenoxypropionsäuren und ebenso der Cyclohexandion-oxime sind jeweils Acetyl-CoA-Carboxylase-Inhibitoren und werden besonders leicht über die Blätter aufgenommen. Sie werden im Nachauflaufverfahren in allen wichtigen Kulturen zur Bekämpfung von Gräsern verwendet werden. Einige wichtige von ihnen, wie z. B. Diclofop, Fenoxaprop, Clodinafop und Tralkoxydim können auch in Getreide zur Bekämpfung von Gräsern Verwendung finden, wobei Mittel auf der Basis von Fenoxaprop und Clodinafop in der Regel in Verbindung mit Safenern, d. h. herbiziden Antidots angewendet werden.

Neuerdings können einige dieser Gräser nur sehr schwer bekämpft werden, weil sich aufgrund der wiederholten Anwendung von herbiziden Wirkstoffen resistente Formen gebildet haben, bzw. Formen, die eine deutlich verminderte Empfindlichkeit gegenüber diesen Wirkstoffgruppen aufweisen. Die entsprechenden Herbizide können dann nicht mehr in einer Aufwandmenge eingesetzt werden, welche die erwünschte herbizide Wirkung gewährleistet ohne dabei die Kulturpflanzen erheblich zu schädigen. Die erhöhte Widerstandsfähigkeit ist je nach Art des Grases und des Herbizides sehr unterschiedlich ausgeprägt und kann so groß sein, daß sogar 2-10-fache Aufwandmengen nicht mehr ausreichend wirksam sind.

Es wurde nun in biologischen Gewächshausversuchen und Freilandversuchen gefunden, daß bestimmte herbizide Wirkstoffkombinationen eine überraschend gute, die Erwartungen weit übersteigende, synergistische Wirksamkeit gegen Schadgräser aus der Gattung Phalaris zeigen und gleichzeitig sehr gut verträglich für die Kulturpflanze sind. Außerdem können mit den vorliegenden herbiziden Kombinationen wirtschaftlich wichtige Schadgräser aus der Gattung Phalaris selektiv bekämpft werden, die bisher mit keinem der Einzelwirkstoffe abgewehrt werden konnten. Dies gilt ebenso für Gräser, die gegen einen der beteiligten Wirkstoffe resistent geworden sind und deshalb in der landwirtschaftlichen Praxis neuartige Probleme aufgeworfen haben. Die Anwendung der erfindungsgemäßen Kombinationen ermöglicht, daß auch solche Arten wieder sehr gut bekämpft werden können. Durch ihre den bekannten herbiziden Mitteln außerordentlich überlegenen Eigenschaften bezüglich Wirkungsspektrum und Wirkungsstärke können die neuen synergistischen Wirkstoffkombinationen in einer erheblich reduzierten Aufwandmenge eingesetzt werden, so daß neben dem Vorteil der verbesserten Kultivierung der Nutzpflanze weitere ökonomische und ökologische Vorteile erzielt werden.

Gegenstand der vorliegenden Erfindung ist daher die Verwendung herbizider Kombinationen zur selektiven Bekämpfung von Schadgräsern aus der Gruppe, welche Phataris spp. umfaßt, in Nutzpflanzenkulturen, wobei jede Kombination

A) Metribuzin und

B) eine oder mehrere Verbindungen aus der Gruppe, welche bestimmte (Hetero)Aryloxyphenoxypropionsäure-Derivate umfaßt, enthält.

Im folgenden werden die geeigneten Verbindungen aufgezählt (vgl. "The Pesticide Manual", 10. Edition, British Crop Protection Council, 1994): Verbindungen des Typs A: Metribuzin;

Verbindungen des Typs B :

die (Hetero)Aryloxyphenoxypropionate, Fenoxaprop, Fenoxaprop-P, Clodinafop, Haloxyfop, Quizalofop, Quizalofop-P, Diclofop, Fluazifop, Fluazifop-P, Propaquizafop, Isoxapyrifop und die $(C_1-C_4)$-Alkylester, $(C_2-C_4)$-Alkenylester oder $(C_2-C_4)$-Alkinylester der vorstehenden Herbizide.

Bevorzugt ist die Verwendung solcher erfindungsgemäßer herbizider Kombinationen, enthaltend als Verbindung A) Metribuzin und B) eine oder mehrere Verbindungen aus der Gruppe, welche Fenoxaprop, Fenoxaprop-P, Clodinafop, Haloxyfop, Quizalofop, Quizalofop-P, Diclofop, Fluazifop-P, Propaquizafop, Isoxapyrifop sowie deren oben genannte Ester umfaßt, ganz besonders die Verwendung genannter Mittel in Getreidekulturen.

Einige der erfindungsgemäß einsetzbaren Herbizid-Kombinationen sind bereits bekannt; ihre Eignung zum Einsatz gegen die genannten Gräser, welche Resistenz gegen einzelne der Herbizide entwickelt haben, war nicht bekannt.

Bekannte Kombination von Herbiziden sind:

a) Metribuzin in Kombination mit Fenoxaprop-(P)-ester [siehe oben genannte EP-A-614608]

b) Metribuzin in Kombination mit Diclofop-methyl; die Wirkung auf Avena fatua [Chem. Abstracts 94:97882r] bzw. die selektive Wirkung auf Eleusine indica in Cynodon spp. (Bermudagrass) [Chem. Abstracts 115:177353m] wird beschrieben.

c) Metribuzin in Kombination mit Fluazifop-P-butyl [Chem. Abstracts 116:2237v]; die Wirkung auf Amaranthus retroflexus, Eleusine indica und Digitaria sanguinalis wird beschrieben.

d) Metribuzin in Kombination mit Fluazifop-P-butyl, Haloxyfop-methyl oder Quizalofop-ethyl [Chem. Abstracts 110: 187715s]; die Wirkung auf Avena fatua, Hordeum vulgare und Sinapis arvensis wird beschrieben.

e) Metribuzin in Kombination mit Haloxyfop und deren Einsatz zur Kontrolle von Schadpflanzen in Okra-kulturen [Chem. Abstracts 107:72722n].

f) Metamitron in Kombination mit Diclofop-methyl und deren erhöhte phytotoxische Wirkung in Zuckerrübenkulturen [Chem. Abstracts 91:135430q].

Die für die erfindungsgemäße Verwendung geeigneten herbiziden Mittel sind gekennzeichnet durch einen wirksamen Gehalt an einer Kombination aus A) Metribuzin und B) einer oder mehreren Verbindungen aus der Gruppe, welche die obengennanten (Hetero)Aryloxyphenoxypropionsäure-Derivate umfaßt.

Gegenstand der vorliegenden Erfindung ist die Verwendung der genannten Kombinationen in einem Verfahren zur Bekämpfung von Schadpflanzen aus der Gattung Phalaris , in Nutzpflanzenkulturen, dadurch gekennzeichnet, daß auf die Pflanzen, deren Samen und/oder die Anbaufläche die Komponenten des obengenannten herbiziden Mittels gemeinsam oder zeitlich getrennt appliziert werden, insbesondere in Getreidekulturen.

Die herbiziden Wirkstoffe, welche als Enantiomere auftreten wie z. B. diejenigen aus der Gruppe der (Hetero) Aryloxyphenoxypropionate, können sowohl in Form ihrer racemischen Gemische als auch ihrer biologisch aktiven Isomeren vorliegen. Sie können entweder als freie Säuren, deren Salze oder bevorzugt als Säureester eingesetzt werden.

Die genannten Verbindungen sind aus der Literatur wie z. B. "The Pesticide Manual", 10. Edition, British Crop Protection Council, 1994 bekannt.

Die erfindungsgemäß verwendeten Wirkstoffkombinationen zeigen eine sehr gute Wirkung gegen wirtschaftlich wichtige Schadgräser aus der Gattung Phalaris. Hierbei genügt eine überraschend geringe Aufwangmenge des Herbizids A, um zusammen mit dem Herbizid B eine sehr gute Effektivität gegen die Gräser zu erzielen. Diese Wirkung der Kombinationen ist synergistisch und geht weit über den zu erwartenden additiven Effekt hinaus. Diese Wirkungssteigerungen erlauben es, die Einsatzmengen der einzelnen Wirkstoffe erheblich zu reduzieren. Solche Eigenschaften bieten dem Anwender erhebliche Vorteile bei der praktischen Unkrautbekämpfung. Er kann die Schadpflanzen billiger, rascher, mit weniger Arbeitsaufwand sowie dauerhafter bekämpfen und dadurch in dem Kulturpflanzenbestand mehr Ertrag ernten.

Außerdem werden auch bei Gräsern, die teilweise bereits resistent, d. h. unempfindlich gegen Herbizide vom Typ B bei alleiniger Anwendung geworden sind, sehr gute Bekämpfungserfolge erzielt. Die einzelnen Kombinationspartner führen zu keiner vergleichsweise guten Wirkung. Die Anwendung der vorliegenden Kombinationen eröffnet daher grundlegend neue, verbesserte Möglichkeiten, bisher unbefriedigend bekämpfbare Gräser oder resistente Gräser sehr effektiv zu bekämpfen.

Haupteinsatzgebiet für die Anwendung der Kombinationen sind vor allem Getreidekulturen, aber auch breitblättrige Kulturen wie Sojabohnen, Baumwolle, ebenso Mais, Reis und zahlreiche andere Kulturen.

Obgleich die erfindungsgemäß verwendeten Mittel eine ausgezeichnete herbizide Aktivität gegenüber Schadpflanzen aufweisen, werden die Kulturpflanzen nur unwesentlich oder gar nicht geschädigt. Die Mittel eignen sich aus diesen Gründen besonders in Weizen sehr gut zur selektiven Bekämpfung von unerwünschtem , Bewuchs von Phalaris spp.

Bei Applikation der Wirkstoffkombinationen auf die grünen Pflanzenteile im Nachauflaufverfahren tritt sehr rasch nach der Behandlung ein Wachstumsstop ein. Die Unkrautpflanzen bleiben in dem zum Applikationszeitpunkt vorhandenen Wuchsstadium stehen oder sterben nach einer gewissen Zeit mehr oder weniger schnell ab, so daß auf diese Weise eine für die Kulturpflanzen schädliche Unkrautkonkurrenz sehr früh und nachhaltig durch den Einsatz der erfindungsgemäß verwendeten Mittel beseitigt werden kann.

Die herbiziden Wirkstoffe der Kombinationen können zusammen ausgebracht (als fertige Formulierung oder im Tank-Mix-Verfahren) oder in einem geringen zeitlichen Abstand von wenigen Stunden oder Tagen in beliebiger Reihenfolge nacheinander appliziert werden.

Das Gewichtsverhältnis der herbiziden Wirkstoffe der Kombinationen kann innerhalb weiter Grenzen variieren und ist vorzugsweise im Bereich von 50:1 bis 1:50.

Die Mischungsverhältnisse der verschiedenen Komponenten können innerhalb weiter Grenzen schwanken. Sie sind insbesondere abhängig vom eingesetzten Mischungspartner, von der Art des zu behandelnden Pflanzenbestandes, vom Entwicklungsstadium der Schadgräser sowie den klimatischen Bedingungen. Die jeweils optimalen Mengen an Herbizid sind vor allem vom verwendeten Wirkstoff vom Typ B abhängig und lassen sich durch einfache Vorversuche ermitteln.

Aus wirtschaftlichen Gründen ist die gemeinsame Anwendung bevorzugt, eine getrennte Ausbringung kann jedoch auch sinnvoll und vorteilhaft sein. Durch das Zusammenwirken zweier verschiedener Wirkmechanismen und unterschiedlicher Resorptionsweise kann durch eine getrennte Anwendung sogar eine bessere Effektivität erreicht werden.

Die Verbindungen von Typ A ,Typ B oder deren Kombinationen können auf verschiedene Weise formuliert werden, je nachdem welche biologischen und/oder physikochemischen Parameter vorgegeben sind. Die erfindungsgemäß verwendeten Wirkstoffkombinationen können entweder als Mischformulierungen der beiden Komponenten vorliegen, die dann in üblicher Weise mit Wasser verdünnt oder als Granulate zur Anwendung gebracht werden, oder als sogenannte Tankmischungen, die durch gemeinsame Verdünnung der getrennt formulierten Komponenten mit Wasser hergestellt werden.

Die Verbindungen (Kombinationen) können auf verschiedene Art formuliert werden, je nachdem welche biologischen und/oder chemisch-physikalischen Parameter vorgegeben sind. Als Formulierungsmöglichkeiten kommen beispielsweise in Frage: Spritzpulver (WP), emulgierbare Konzentrate (EC), wäßrige Lösungen (SL), Emulsionen (EW) wie Öl-in Wasser- und Wasser-in-Öl- Emulsionen, versprühbare Lösungen oder Emulsionen, Dispersionen auf Öl- oder Wasserbasis, Suspoemulsionen, Stäubemittel (DP), Beizmittel, besonder aber als Granulate zur Boden- oder Streuapplikation oder wasserdispergierbare Granulate (WG), ULV-Formulierungen, Mikrokapseln oder Wachse.

Diese einzelnen Formulierungstypen sind im Prinzip bekannt und werden beispielsweise beschrieben in: Winnacker-Küchler, "Chemische Technologie", Band 7, C. Hauser Verlag München, 4. Aufl. 1986; van Valkenburg, "Pesticides Formulations", Marcel Dekker N. Y., 2. Auflage 1972 - 73; K. Martens, "Spray Drying Handbook", 3. Auflage, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2. Auflage, Darland Books, Caldwell N. J.; H. v. Olphen, "Introduction to Clay Colloid Chemistry", 2. Auflage, J. Wiley Sons, N. Y., Marsden, "Solvents Guide", 2. Auflage, Interscience, N. Y. 1950; McCutcheon's, "Detergents and Emulsifiers Annual", MC Publ. Gorp., Ridgewood N. J.; Sisley and Wood, "Encyclopedia of Surface Active Agents", Chem. Publ. Co. Inc., N. Y. 1964; Schönfeldt, "Grenzflächenaktive Äthylenoxidaddukte", Wiss. Verlagsgesell., Stuttgart 1976; Winnacker-Küchler, "Chemische Technologie", Band 7, C. Hauser Verlag München, 4. Aufl. 1986.

Auf der Basis dieser Formulierungen lassen sich auch Kombinationen mit anderen pestizid wirksamen Stoffen, wie anderen Herbiziden, Fungiziden oder Insektiziden, sowie Düngemitteln und/oder Wachstumsregulatoren herstellen, z. B. in Form einer Fertigformulierung oder als Tankmix.

Spritzpulver (benetzbare Pulver) sind in Wasser gleichmäßig dispergierbare Präparate, die neben dem Wirkstoff außer einem Verdünnungs- oder Inertstoff noch Netzmittel, z. B. polyoxethylierte Alkylphenole, polyoxethylierte Fettalkohole oder Fettamine, Alkan- oder Alkylbenzolsulfonate und Dispergiermittel, z. B. ligninsulfonsaures Natrium, 2,2'-dinaphthylmethan-6,6'-disulfonsaures Natrium, dibutylnaphthalin-sulfonsaures Natrium oder auch oleoylmethyltaurinsaures Natrium enthalten.

Emulgierbare Konzentrate werden durch Auflösen des Wirkstoffes in einem organischen Lösungsmittel, z. B. Butanol, Cyclohexanon, Dimethylformamid, Xylol oder auch höhersiedenden Aromaten oder Kohlenwasserstoffen, unter Zusatz von einem oder mehreren Emulgatoren hergestellt. Als Emulgatoren können beispielsweise verwendet werden: Alkyllaurylsulfonsaure Calcium-Salze wie Ca-Dodecylbenzolsulfonat oder nichtionische Emulgatoren wie Fettsäurepolyglykolester, Alkyllaurylpolyglykolether, Fettalkoholpolyglykolether, Propylenoxid-Ethylenoxid-Kondensationsprodukte, Alkylpolyether, Sorbitanfettsäureester, Polyoxyethylensorbitanfettsäureester oder Polyoxethylensorbitester.

Stäubemittel erhält man durch Vermahlen des Wirkstoffes mit fein verteilten festen Stoffen, z. B. Talkum, natürlichen Tonen wie Kaolin, Bentonit und Pyrophyllit oder Diatomeenerde.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z. B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden.

Die agrochemischen Zubereitungen enthalten in der Regel 0,1 bis 99 Gewichtsprozent, insbesondere 2 bis 95 Gew.-%, Wirkstoffe A bzw. B. Die Konzentrationen der Wirkstoffe A und B können in den Formulierungen verschieden sein.

In Spritzpulvern beträgt die Wirkstoffkonzentration z. B. etwa 10 bis 95 Gew.-%, der Rest zu 100 Gew.-% besteht aus üblichen Formulierungsbestandteilen. Bei emulgierbaren Konzentraten kann die Wirkstoffkonzentration etwa 1 bis 85 Gew.-%, vorzugsweise 5 bis 80 Gew.-% betragen. Staubförmige Formulierungen enthalten etwa 1 bis 25 Gew.-% meistens 5 bis 20 Gew.-% an Wirkstoff, versprühbare Lösungen etwa 0,2 bis 25 Gew.-%, vorzugsweise 2 bis 20 Gew.-% Wirkstoff. Bei Granulaten, z. B. wasserdispergierbaren Granulaten, hängt der Wirkstoffgehalt zum Teil davon ab, ob die wirksame Verbindung flüssig oder fest vorliegt und welche Granulierhilfsmittel und Füllstoffe verwendet werden. In der Regel liegt der Gehalt bei den in Wasser dispergierbaren Granulaten zwischen 5 und 90 Gew.-%, bei Streugranulaten zwischen 1 und 50 %, bevorzugt zwischen 2 und 25 %.

Daneben enthalten die genannten Wirkstoffformulierungen gegebenenfalls die jeweils üblichen Haft-, Netz-, Dispergier-, Emulgier-, Penetrations-, Lösungsmittel, Füll- oder Trägerstoffe.

Zur Anwendung werden die in handelsüblicher Form vorliegenden Formulierungen gegebenenfalls in üblicher Weise verdünnt, z. B. bei Spritzpulvern, emulgierbaren Konzentraten, Dispersionen und wasserdispergierbaren Granulaten mittels Wasser. Staubförmige Zubereitungen, Boden- bzw. Streugranulate sowie versprühbare Lösungen werden vor der Anwendung üblicherweise nicht mehr mit weiteren inerten Stoffen verdünnt.

Mit den äußeren Bedingungen, wie z. B. Temperatur, Feuchtigkeit, der Art des verwendeten Herbizids u. a., variiert die erforderliche Aufwandmenge der Mischungen.

Die nachfolgenden Beispiele dienen zur weiteren Erläuterung der Erfindung ohne dabei irgendeine Einschränkung darzustellen.

Biologische Beispiele

Beispiel 1: Freilandversuch, Bekämpfung von Schadpflanzen im Nachauflauf

In Feldversuchen wurden auf Parzellen von 10 qm Größe, die mit schwer bekämpfbaren Gräsern verunkrautet waren, die erfindungsgemäßen Kombinationen zum angegebenen Wachstumsstadium appliziert. 3 bzw. 4 Wochen später wurde der Wirkungsgrad der Herbizidbehandlungen im Vergleich zur unbehandelten Kontrolle bonitiert, wobei die Bewertung nach einer Prozentskala (0-100% Wirkung) erfolgte.

Tabelle 1: Bekämpfung von Phalaris spp. (Stadium: Anfang Bestockung) Bonitur 28 Tage nach Behandlung. Theoretisch berechnete Werte nach Colby in Klammern.

| Herbizid | Dosis [kg a.i./ha] | Bonitur[%] |
|---|---|---|
| Fenoxaprop-P-ethyl | 0,090 | 73 |
| Metribuzin | 0,144 | 0 |
| | 0,192 | 0 |
| Fenoxaprop-P-ethyl + Metribuzin | 0,090 + 0,048 | 85 (73) |
| | 0,090 + 0,096 | 91 (73) |
| | 0,090 + 0,144 | 94 (73) |

Tabelle 2: Bekämpfung von Phalaris spp. unterschiedlicher Resistenz in Triticum aestivum (Weizen), Bonitur 21 Tage nach der Behandlung. Theoretisch berechnete Werte nach Colby in Klammern.

| Herbizid | Dosis [kg a.i./ha] | A Bonitur[%] Phalaris | Weizen | B Bonitur [%] Phalaris | Weizen |
|---|---|---|---|---|---|
| Diclofop | 0,700 | 3 | 0 | 76 | 0 |
| Metribuzin | 0,048 | 15 | 4 | 28 | 0 |
| | 0,144 | 53 | 5 | 31 | 0 |
| Diclofop + Metribuzin | 0,7 + 0,048 | 44 (18) | 4 | 99 (83) | 0 |
| | 0,7 + 0,096 | 81 (-) | 5 | 99 (-) | 0 |
| | + 0,144 | 88 (54) | 6 | - | - |

A: Applikation im 2-4 Blattstadium
B: Applikation im 1-2 Blattstadium

In allen Fällen wurde bei den Kombinationen zwischen dem errechneten und dem gefundenen Wirkungsgrad unterschieden. Der errechnete, theoretisch zu erwartende Wirkungsgrad einer Kombination kann nach der Formel von Colby näherungsweise ermittelt werden (S. R. Colby, Weeds 15 (1967), Seiten 20-22, "Calculations of synergistic and antagonistic responses of herbicide combinations."). Die Formel lautet für Zweierkombinationen:

$$E = X + Y - \frac{X * Y}{100}$$

wobei
X = % Schädigung durch Herbizid A bei x kg/ha Aufwandmenge;
Y = % Schädigung durch Herbizid B bei y kg/ha Aufwandmenge;
E = %-Wert der durch die Herbizide A und B bei x und y kg/ha

Aufwandmenge zu erwartenden Schädigung.

Ist die tatsächliche Schädigung größer als die rechnerisch zu erwartende, so liegt ein synergistischer Effekt vor.
Die erfindungsgemäß verwendeten Wirkstoffkombinationen haben eine herbizide Effizienz, die höher ist, als sie aufgrund der beobachteten Wirkungen der Einzelkomponenten bei alleiniger Anwendung zu erwarten ist (Berechnung nach Colby). Die erfindungsgemäß verwendeten Wirkstoffkombinationen sind somit synergistisch. Darüber hinaus ist der synergistische Effekt so stark ausgeprägt, daß sogar die additiven Effekte der Einzelkomponenten (ohne Korrekturterm nach Colby) deutlich übertroffen werden.

**Patentansprüche**

1. Verwendung herbizider Kombinationen, die

   A) Metribuzin und
   B) eine oder mehrere (Hetero)Aryloxyphenoxypropionsäure-Derivate, ausgewählt aus der Gruppe Fenoxaprop, Fenoxaprop-P, Clodinafop, Haloxyfop, Quizalofop, Quizalofop-P, Diclofop, Fluazifop, Fluazifop-P, Propaquizafop, Isoxapyrifop und den $(C_1-C_4)$-Alkylestern, $(C_2-C_4)$-Alkenylestern und $(C_1-C_4)$-Alkinylestern der vorgenannten Verbindungen, enthalten, zur selektiven Bekämpfung von Schadgräsern aus der Gattung Phalaris in Nutzpflanzenkulturen.

2. Verwendung nach Anspruch 1, **dadurch gekennzeichnet, dass** die herbiziden Kombinationen als Herbizid vom Typ B) Fenoxaprop-P-ethyl oder Diclofop-methyl enthalten.

3. Verwendung nach Anspruch 1, **dadurch gekennzeichnet, dass** die herbizide Kombination aus Metribuzin und Fenoxaprop-P-ethyl besteht.

4. Verwendung nach Anspruch 1, **dadurch gekennzeichnet, dass** die herbizide Kombination aus Metribuzin und Diclofop oder dessen Methylester besteht.

5. Verwendung nach einem der Ansprüche 1 bis 4, **dadurch gekennzeichnet, dass** die herbizide Kombination die Wirkstoffe A) und B) im Gewichtsverhältnis von 50:1 bis 1:50 enthält.

6. Verwendung nach einem der Ansprüche 1 bis 5, **dadurch gekennzeichnet, dass** die Nutzpflanzenkultur ein Getreide ist.

7. Verwendung nach Anspruch 6, **dadurch gekennzeichnet, dass** die Nutzpflanzenkultur Weizen ist.


**Claims**

1. The use of a herbicidal composition comprising

   A) metribuzin and
   B) one or more (hetero)aryloxyphenoxypropionic acid derivatives selected from the group consisting of fenoxaprop, fenoxaprop-P, clodinafop, haloxyfop, quizalofop, quizalofop-P, diclofop, fluazifop, fluazifop-P, propaquizafop, isoxapyrifop and the $(C_1-C_4)$-alkyl esters, $(C_2-C_4)$-alkenyl esters and $(C_1-C_4)$-alkynyl esters of the compounds mentioned above,
   for the selective control of harmful grasses of the genus *Phalaris* in crops of useful plants.

2. The use as claimed in claim 1, wherein the herbicidal combinations comprise, as herbicide type B), fenoxaprop-P-ethyl or diclofop-methyl.

3. The use as claimed in claim 1, wherein the herbicidal combination consists of metribuzin and fenoxaprop-P-ethyl.

4. The use as claimed in claim 1, wherein the herbicidal combination consists of metribuzin and diclofop or its methyl ester.

5. The use as claimed in any of claims 1 to 4, wherein the herbicidal combination comprises the active compounds A) and B) in a weight ratio of from 50:1 to 1:50.

6. The use as claimed in any of claims 1 to 5, wherein the crop of a useful plant is a cereal.

7. The use as claimed in claim 6, wherein the crop of a useful plant is wheat.

**Revendications**

1. Utilisation de combinaisons herbicides, lesquelles contiennent :

   A) de la métribuzine et
   B) un ou plusieurs dérivés d'acide (hétéro)aryloxyphénoxypropionique, choisis dans le groupe constitué de fénoxaprop, fénoxaprop-P, clodinafop, haloxyfop, quizalofop, quizalofop-P, diclofop, fluazifop, fluazifop-P, propaquizafop, isoxapyrifop et les esters alkyliques en $C_1$-$C_4$, esters alcényliques en $C_2$-$C_4$ et esters alcynyliques en $C_1$-$C_4$ des composés cités précédemment,
   destinée à une lutte sélective contre des herbes nocives de l'espèce Phalaris dans des cultures de plantes utiles.

2. Utilisation selon la revendication 1, **caractérisée en ce que** les combinaisons herbicides contiennent comme herbicide de type B) le fénoxaprop-P-éthyle ou le diclofop-méthyle.

3. Utilisation selon la revendication 1, **caractérisée en ce que** la combinaison herbicide est constituée de métribuzine et de fénoxaprop-P-éthyle.

4. Utilisation selon la revendication 1, **caractérisée en ce que** la combinaison herbicide est constituée de métribuzine et de diclofop ou de leurs esters méthyliques.

5. Utilisation selon l'une quelconque des revendications 1 à 4, **caractérisée en ce que** la combinaison herbicide contient les principes actifs A) et B) dans un rapport massique de 50:1 à 1:50.

6. Utilisation selon l'une quelconque des revendications 1 à 5, **caractérisée en ce que** la culture de plantes utiles est la culture d'une céréale.

7. Utilisation selon la revendication 6, **caractérisée en ce que** la culture de plantes utiles est la culture de blé.

# EP 0 823 995 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 0614608 A
- EP 0103732 A
- EP 0302983 A
- EP 614608 A

### In der Beschreibung aufgeführte Nicht-Patentliteratur

- *Aus Res.Rep.Expert Comm.Weeds West. Can.,* 1984, vol. 2, 593-94
- *Weed Technology,* 1995, vol. 9 (4), 741-747
- The Pesticide Manual. British Crop Protection Council, 1994
- **Winnacker-Küchler.** Chemische Technologie. C. Hauser Verlag, 1986, vol. 7
- **van Valkenburg.** Pesticides Formulations. Marcel Dekker, 1972, 73
- **Watkins.** Handbook of Insecticide Dust Diluents and Carriers. Darland Books
- **H. v. Olphen.** Introduction to Clay Colloid Chemistry. J. Wiley Sons
- **Marsden.** Solvents Guide. Interscience, 1950
- **McCutcheon's.** Detergents and Emulsifiers Annual. MC Publ. Gorp,
- **Sisley ; Wood.** Encyclopedia of Surface Active Agents. Chem. Publ. Co. Inc, 1964
- **Schönfeldt.** Grenzflächenaktive Äthylenoxidaddukte. Wiss. Verlagsgesell, 1976
- **S. R. Colby.** *Weeds,* 1967, vol. 15, 20-22